(19) Europäisches Patentamt
European Patent Office
Office européen des brevets

(11) **EP 4 318 342 A1**

(12) **EUROPEAN PATENT APPLICATION**

(43) Date of publication:
**07.02.2024 Bulletin 2024/06**

(21) Application number: **22188289.7**

(22) Date of filing: **02.08.2022**

(51) International Patent Classification (IPC):
**G06Q 10/047** (2023.01)

(52) Cooperative Patent Classification (CPC):
**G06Q 10/047**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Gottschalk, Corinna**
**81379 München (DE)**

• **Moll, Christoph**
**81549 München (DE)**

(74) Representative: **Siemens Patent Attorneys**
**Postfach 22 16 34**
**80506 München (DE)**

Remarks:
A request for correction of the description has been filed pursuant to Rule 139 EPC. A decision on the request will be taken during the proceedings before the Examining Division (Guidelines for Examination in the EPO, A-V, 3.).

(54) **METHOD AND SYSTEM TO SCHEDULE TRANSPORTS IN AN INDUSTRIAL PRODUCTION**

(57) The present application relates to a computer-implemented method for scheduling transports by vehicles in an industrial production. The method comprises obtaining a transport set including transports to be performed by vehicles, adding each transport of the transport set to a bipartite transport graph having a left node set, a right node set, a plurality of empty transport edges and a plurality of matching edges, wherein adding each transport includes adding a left node to the left node set and a right node to the right node set corresponding to each transport and empty transport edges incident on one of the added left node and the added right node to the plurality of empty transport edges, and determining an alternating tree, the alternating tree starting at one of the added left node and the added right node and alternatingly continuing along empty transport edges not included and included in the plurality of matching edges, determining whether the alternating tree includes an augmenting path, the augmenting path being a path terminating with an empty transport edge not included in the plurality of matching edges, if the alternating tree includes an augmenting path, updating the plurality of matching edges, and, if the alternating tree does not include an augmenting path, determining whether to amend the transport corresponding to the added left node and the added right node, and scheduling the transports on the vehicles based on the plurality of matching edges and a plurality of equal transport edges.

FIG 7

EP 4 318 342 A1

**Description**

TECHNICAL FIELD

The invention generally relates to scheduling transports on vehicles, such as autonomous guided vehicles -AGVs- in an industrial production. More precisely, the invention relates to determining whether a set of transports can be scheduled on a fixed number of vehicles and to processing the determination that such a schedule is possible.

BACKGROUND

In industrial production systems, a high number of transports between various production sites, storage facilities cargo bays and other sites are necessary to ensure continuous and timely production. Scheduling such a high number of transports is usually performed with a heuristic approach implemented on a computing device. If the feasibility of scheduling the transports needs to be determined, e.g., to determine the feasibility of a planned production system, or if transports are pre-scheduled, e.g., to determine a transport schedule as part of a daily or weekly pro-duction schedule, such a heuristic approach requires long runtimes and many processing resources. The same is true if an existing transport schedule needs to be amended or in cases where transports are generally scheduled on the fly.

Additionally, when planning an industrial pro-duction, the machines or pro-duction sites are planned incrementally, i.e. the industrial production is incrementally expanded. However, heuristic approaches to scheduling transports in an industrial production typically only enable scheduling all transports at once. Thus, if the industrial production is planned incrementally, in a heuristic approach all transports need to be re-scheduled every time the industrial production is expanded. This further increases the runtime of the scheduling of transports in an industrial production.

Therefore, it is an objective of the present invention to reduce the runtime when incrementally determining whether it is feasible to determine a transport schedule or when pre-scheduling transports.

SUMMARY OF THE INVENTION

To achieve this objective, the present invention provides a computer-implemented method for scheduling transports by vehicles in an industrial production, the method comprising the steps of: obtaining a transport set including trans-ports to be performed by vehicles adding each transport of the transport set to a bi-partite transport graph having a left node set, a right node set, a plurality of empty transport edges and a plurality of matching edges, wherein adding each transport includes: adding a left node to the left node set and a right node to the right node set corresponding to each transport and empty transport edges incident on the added left node and the added right node to the plurality of empty transport edges; and determining an alternating tree, the alternating tree starting at one of the added left node and the added right node and alternatingly continuing along empty transport edges not included and included in the plurality of matching edges; determining whether the alternating tree includes an augmenting path, the augmenting path being a path terminating with an empty transport edge not included in the plurality of matching edges, if the alternating tree includes an augmenting path, updating the plurality of matching edges, and if the alternating tree does not include an augmenting path, determining whether to amend the transport corresponding to the added left node and the added right node. The method may further include scheduling the transports on the vehicles based on the plurality of matching edges and a plurality of equal transport edges.

Further, the present invention provides a computer-readable storage device configured to store instructions executable by at least one processor of a computing device, wherein the instructions cause the at least one processor to perform the above method.

Further, the present invention provides an apparatus for scheduling transports by vehicles in an industrial production, the apparatus comprising at least one processor and a storage medium, wherein the storage medium comprises instructions, which cause the at least one processor to obtain a transport set including transports to be performed by vehicles, add each transport of the transport set to a bipartite transport graph having a left node set, a right node set, a plurality of empty transport edges and a plurality of matching edges, wherein adding each transport includes adding a left node to the left node set and a right node to the right node set corresponding to each transport and empty transport edges incident on one of the added left node and the added right node to the plurality of empty transport edges, and determining an alternating tree, the alternating tree starting at one of the added left node and the added right node and alternatingly continuing along empty transport edges not included and included in the plurality of matching edges, determining whether the alternating tree includes an augmenting path, the augmenting path being a path terminating with an empty transport edge not included in the plurality of matching edges, if the alternating tree includes an augmenting path, updating the plurality of matching edges, and if the alternating tree does not include an augmenting path, determining whether to amend the transport corresponding to the added left node and the added right node, and schedule the transports on the vehicles based on the plurality of matching edges and a plurality of equal transport edges.

BRIEF DESCRIPTION OF THE DRAWINGS

Embodiments of the present invention will be described with reference to the following appended drawings, in which like reference signs refer to like elements.

Figs. 1A and 1B provide a flowchart of a computer-implemented method for scheduling transports by vehicles in an industrial production according to embodiments of the present invention.

Fig. 2 shows an exemplary bipartite transport graph according to embodiments of the present invention.

Fig. 3 shows an exemplary scheduling of transports on vehicles based on a plurality of matching edges and a plurality of equal transport edges according to embodiments of the present invention.

Fig. 4 shows an exemplary bipartite transport graph after a further transport has been added according to embodiments of the present invention.

Fig. 5 shows an exemplary alternating tree determined based on the bipartite transport graph of Fig. 4 according to embodiments of the present invention.

Fig. 6 shows an exemplary bipartite transport graph based on the bipartite transport graph of Fig. 4 after a transport has been amended according to embodiments of the present invention.

Fig. 7 shows an exemplary alternating tree determined based on the bipartite transport graph of Fig. 6 according to embodiments of the present invention.

Fig. 8 shows an exemplary scheduling of transports on vehicles based on a plurality of matching edges updated based on the alternating tree of Fig. 7 according to embodiments of the present invention.

Fig. 9 illustrates an exemplary computing device configured to perform a method for scheduling transports by vehicles in an industrial production according to embodiments of the present invention.

It should be understood that these drawings are in no way meant to limit the disclosure of the present invention. Rather, these drawings are provided to assist in understanding the invention. The person skilled in the art will readily understand that aspects of the present invention shown in one drawing may be combined with aspects in another drawing or may be omitted without departing from the scope of the present invention.

DETAILED DESCRIPTION

The invention generally provides a computer-implemented method for scheduling transports by vehicles in an industrial production. Based on a bipartite transport graph, the method adds each transport to be performed in the industrial production to the bipartite transport graph by adding a node corresponding to the respective transport to both the left node set and the right node set as well as empty transport edges incident on the added left node and the added right node. The method then continues to determine an alternating tree starting at one of the added left node and the added right node. Based on the alternating tree, the method determines whether a plurality of matching edges can be increased or whether transport added to the bipartite graph needs to be amended given the fixed number of vehicles available in the industrial production. If the transport needs to be amended, only the empty transport edges incident on the added left node and the added right node are updated, which may entail adding and amending empty transport edges incident on the added left node and the added right node. The transports already added to the bipartite transport graph as well as their corresponding empty transport edges are not changed. Additionally, the alternating tree is amended based on the updated empty transport edges. Once the transport has been amended so that the plurality of matching edges has been increased or if such an increase has been deemed unnecessary, the method determines that the transports in the bipartite transport graph can be scheduled on the fixed number of vehicles available in the industrial production and may proceed to schedule the transport on the vehicles.

By incrementally building up a bipartite transport graph and only updating empty transport edges incident on the newly added nodes as well as the corresponding alternating tree, the runtime necessary to determine whether and how a set of transports can be scheduled can be reduced. The general concept discussed above may be even further refined to further improve the runtime if required based on the constraints of the processing system and the size of the set of transports.

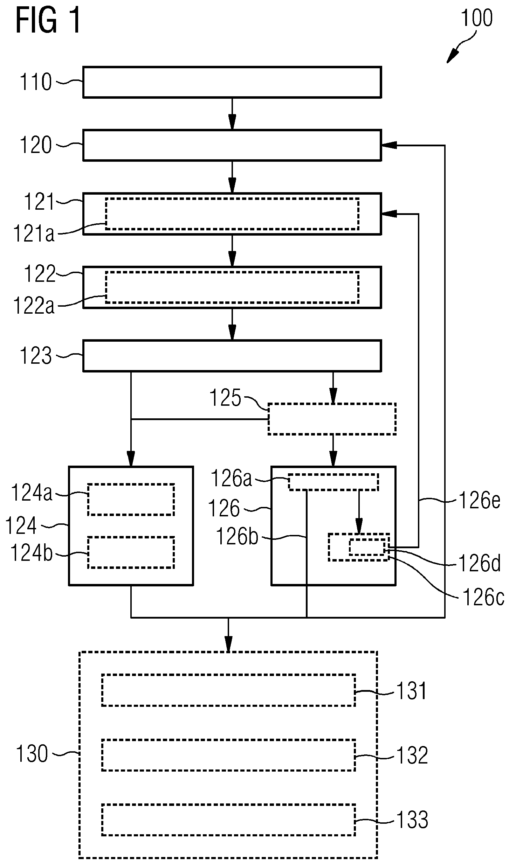

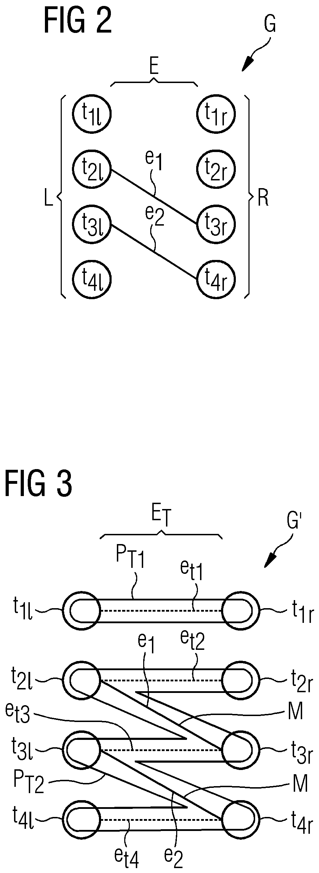

The general principle of the method discussed above will now be illustrated based on Figs. 1A and 1B, which provide a flowchart of the method steps in conjunction with Figs. 2 to 8, which provide visual examples of the actions taken during each step. Accordingly, Figs. 1A and 1B serve as a guide through the embodiments of the method of the present invention while Figs. 2 to 8 are used to illustrate the various actions and decisions performed and made, respectively, at various steps of the method of the present invention as well as the various structures referred to throughout this disclosure.

Figs. 1A and 1B provide a flowchart of a computer-implemented method 800 for scheduling transports by vehicles in an industrial production.

Industrial production in the context of the present application may for refer to any commercial site requiring transport between various locations of the commercial site. For example, industrial production may refer to a production site manufacturing goods. Manufacturing the goods may require transporting raw materials from storage to one or more manufacturing devices and may further require transporting semifinished products between further manufacturing devices to finalize the product or transporting finished products to storage or to loading docks. In a further example, industrial production may also refer to a logistics center transporting industrial products between various storage sites of the logistics center, e.g., to group various products for further transport. Accordingly, the vehicles referred to throughout this disclosure may refer to any type of vehicle suitable for transport in an industrial pro-duction. For example, the vehicles may be AGVs guided according to the transport schedule defined by the method of the present application or may be vehicles operated by drivers who receive transport orders based on the transport schedule defined by the method of the present invention.

The number of vehicles present in the industrial production is typically fixed. However, the method may also be employed in industrial production systems capable of increasing the number of vehicles if the method determines that the number of vehicles present is incapable of performing all transports in the set of transports without such an increase.

As stated above, Figs. 1A and 1B provide a flowchart of a method 800 for scheduling transports. Scheduling transports should be understood in the context of the present application to refer both to actually scheduling transports and to determining whether it is possible to schedule a set of transports on the vehicles present in the industrial production system. For example, the method of the present application may be used to determine whether a planned industrial production is feasible given the number of vehicles planned for the production as well as the expected durations of the transports and the distances between start and end locations of the transports given the planned production floorplan. In such a use-case of the method of the present invention, the transport schedule is not required. In a further use-case, the method is used to actually pre-schedule transports, e.g. based on a daily, weekly or quarterly production plan. In a further use case, such as in a fully autonomous industrial production, the transports may be pre-scheduled using the method of the present invention and the method may be further employed to schedule further transports necessitated by e.g., a change in required output of the industrial production.

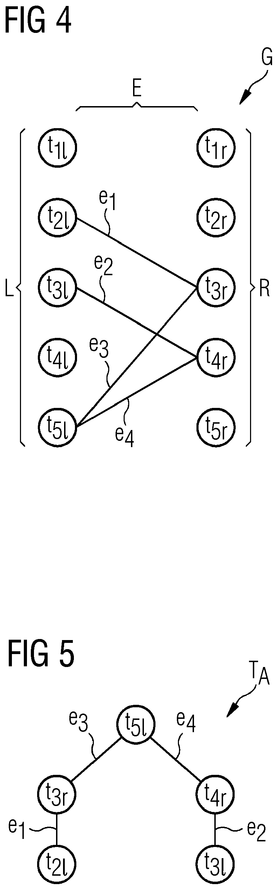

In step 110, method 100 obtains a transport set T to be performed by the vehicles of the industrial production. The set of transport T includes one or more transports and may for example be defined as

$$T = (t_1, t_2, \ldots, t_n),$$

with n being any positive integer. The following example shown in Figs. 2 to 8 is based on a set of transports with $n = 4$ (Figs. 2 and 3), which is extended to a set of transports with $n = 5$ (in Figs. 4 to 8) in order to provide a simple example. However, it will be understood that n may any number of transports, such as 5,000, 50,000 or 500,000. Each transport of the set of transports may include or define a start time and a start location of the transport as well as an end time and an end location of the transport. Each transport may include or define further information in order to enable scheduling transports in an industrial production.

The set of transports may for example be provided by a production planning entity or by tool for planning an industrial production, e.g. with regard to the floorplan or other aspects of the industrial production.

In step 120, method 100 adds each transport of transport set T to a bipartite transport graph. An exemplary bipartite transport graph G is shown in Fig. 2 and includes a left node set L, a right node set R and a plurality of empty transport edges E. Bipartite transport graph G may thus be defined as

$$G = (L, R, E)$$

Bipartite transport graph G further includes a plurality of matching edges M, which is not shown in Fig. 2.

As stated above, the examples of Figs. 2 to 8 are based on extending a transport set T from including five transports $t_1$ to $t_4$ to including five transports $t_1$ to $t_5$. Fig. 2 shows bi-partite transport graph G after step 820 has already been performed four times. Accordingly, transports $t_1$ to $t_4$ have already been added to bipartite transport graph G. Left node set L and right node set R of Fig. 2 therefore each include four nodes for a total of eight nodes in bipartite transport graph G. Each node in left node set L and each node in right node set R respectively corresponds to one of the four transports $t_1$ to $t_4$ of transport set T already added to bipartite transport graph G. In other words, adding each transport of transport set T to bipartite transport graph G adds each transport to both left node set L and right node set R. Left node set L and right node set L in the case of Fig. 2 may thus be defined as

$$L = (t_{1l}, t_{2l}, t_{3l}, t_{4l})$$

and

$$R = (t_{1r}, t_{2r}, t_{3r}, t_{4r}),$$

with node $t_{1l}$ of the left node set and node $t_{1r}$ of the right node set corresponding to transport $t_1$ of transport set T. The same applies to the remaining three nodes of left node set L and left node set R, respectively. Consequently, once all transports t of transport set T have been added to bipartite transport graph G, left node set L and right node set R include as many nodes as there are transports included in transport set T and bipartite transport graph G includes twice the number of nodes as there are trans-

ports included in transport set T.

It will be understood that initially, bipartite transport graph G is empty and continues to increase in size with the addition of each transport and the corresponding performance of step 120 and the subsequently discussed sub-steps of step 120.

Since nodes of the left node set L and the right node set R corresponding to the same transport t of transport set T are added at the same time, such nodes are always shown throughout the examples of Figs. 2 to 8 as horizontal neighbors.

The plurality of empty transport edges E of Fig. 2 includes empty transport edges $e_1$ and $e_2$ of bipartite transport graph G and may thus be defined as

$$E = (e_1, e_2)$$

Each empty transport edge of plurality of empty transport edges E corresponds to an empty transport performable by a vehicle of the industrial production between a left node, i.e., a transport, of the left node set, and a right node, i.e., a transport, of the right node set. In other words, an empty transport is an empty trip by a vehicle of the industrial production from the end location of one transport to the start location of another transport. An empty transport edge in bipartite transport graph G thus indicates that such a trip can be completed by a vehicle of the industrial production system between the end time of one transport and the start time of another transport. It follows from this definition that there are no empty transport edges between a node of the left node set and a node of the right node set corresponding to the same transport. In summary, an empty transport edge may be defined as

$$e_n = (t_{il}, t_{jr}).$$

Based on this definition of the empty transport edges, Bipartite transport graph G of Fig. 2 indicates the following: Based on the end location and the end time of transport $t_1$, none of the start locations of transports $t_2$ to $t_4$ can be reached prior to the start time of any one of these transports. The same applies to transport $t_4$ with regard to transports $t_1$ to $t_3$. Based on the end location and the end time of transport $t_2$, the start location of transport $t_3$ can be reached prior to the start time of transport $t_3$. The same applies to transport $t_3$ with regard to transport $t_4$. Accordingly, plurality of empty transport edges E of Fig. 2 includes two empty transport edges $e_1$ and $e_2$. It should be understood that plurality of empty transport edges E may include a significantly higher number of empty transport edges, such as 100, 1,000 or 10,000.

The plurality of matching edges M is a subset of plurality of empty transport edges E. This subset includes empty transport edges which do not share an endpoint. In other words, there is only one edge incident on each node of the left node set and the right node set in plurality of matching edges M. As an example, bipartite transport graph G of Fig. 2 could include, at a maximum, four empty transport edges given that bipartite transport graph G includes four nodes per left node set L and per right node set R. Given that the example of Fig. 2 only includes two empty transport edges which do not share an endpoint, the plurality of empty transport edges E corresponds to the plurality of matching edges M. However, this need not be the case, as will be seen in the following figures.

The plurality of matching edges is used by method 100 to determine the feasibility of a scheduling the transports of transport set T on the fixed number of vehicles of the industrial production. As will be discussed later with reference to step 130, the plurality of matching edges help to determine how many transports may be performed sequentially and how many transport sequences are required to perform all transports in transport set T.

The general structure of bipartite transport graph enables shorter runtimes when determining whether scheduling transports in an industrial production is feasible and when determining a transport schedule, as will be shown in the following.

Based on the general structure of bipartite transport graph G of Fig. 2, adding each transport of transport set T will now be explained in more detail with reference to sub-steps 121 to 126e of step 120 and to Figs. 4 to 7.

In step 121, method 100 adds a left node to left node set L and a right node to right node set R corresponding to each transport and empty transport edges incident on the added left node and the added right node to the plurality of empty transport edges E. An example of step 121 is shown in Fig. 4.

Fig. 4 shows bipartite transport graph G, which corresponds to bipartite transport graph G of Fig. 2 and to which a left node $t_{5l}$ and a right node $t_{5r}$ corresponding to transport $t_5$ of transport set T have been added. Further, empty transport edges $e_3$ and $e_4$ have also been added to the plurality of empty transport edges E. It should be noted that bipartite transport graph G of Fig. 4 has not otherwise been changed with regard to the bipartite transport graph of Fig. 2. More precisely, method 100 adds two nodes to bipartite transport graph G but leaves the left nodes and the right nodes as well as the empty transport edges incident thereon unchanged. Each iteration of step 121 thus only impacts the nodes and the empty transport edges corresponding to the transport currently being added to bipartite transport graph G.

Regarding adding the empty transport edges, step 121 may, in some embodiments, include step 121a. In step 121a, method 100 determines, based on a start time, a start location, an end time and an end location of the transport corresponding to the added node, empty runs performable by vehicles of the industrial production system between the transport corresponding to the added nodes and the transports of the transport set previously added to the bipartite transport graph. Based on the example of Fig. 4, method 100 may in step 121a determine, based on the end location and the end time of transport $t_5$, which empty runs to the start locations of transports $t_1$ to $t_4$ are possible given their respective start times. In Fig. 4, this determination leads to the addition of empty transport edges $e_3$ and $e_4$ from left node $t_{5l}$ to right nodes $t_{3r}$ and $t_{4r}$. Therefore, a vehicle which has performed transport $t_5$ can reach the start location of transports $t_3$ and $t_4$ and can accordingly perform transport $t_3$ or $t_4$ after performing transport $t_5$. Further based on the example of Fig. 4, method 100 may in step 121a determine, based on the start location and the start time of transport $t_5$, which empty runs from the end locations of transports $t_1$ to $t_4$ are possible given their respective end times. In Fig. 4, no such empty runs from the end locations of transports $t_1$ to $t_4$ are possible. Accordingly, bipartite graph G of Fig. 4 does not include empty transport edges incident on node $t_{5r}$.

Determining empty transport edges, i.e., possible empty runs between transports, may further include determining the duration of the empty runs. Determining the duration may for example be based on the floorplan of an industrial production and an average speed of vehicles between various sites of the industrial production. In particular in industrial productions using AGVs, the speed of the AGVs may be a generally constant speed determined by an AGV controller. In industrial productions using human-operated vehicles, the speed may be known due to speed limits defined for the industrial production. The distance between sites of the industrial production may be determined based on transport paths defined in the floorplan or in the case of AGVs by the AGV controller. The distance may also be determined based on an average distance between sites in cases where the floorplan follows some regular arrangement of sites.

In step 122, method 100 determines an alternating tree, which starts at one of the added left node and the added right node and alternatingly continues along empty transport edges not included and included in the plurality of matching edges. Step 122 will be explained with reference to Fig. 4 and Fig. 5.

Fig. 5 shows an exemplary alternating tree $T_A$ determined by step 122 of method 100. Alternating tree $T_A$ starts with node $t_{5l}$ of bipartite transport graph G of Fig. 4. In other words, in the example of Figs. 4 and 5, method 100 starts in step 122 to determine alternating tree $T_A$ at the left node added to bipartite transport graph G in step 121. From the added left node, the determination of alternating tree $T_A$ alternatingly continues along empty transport edges not included and included in the plurality of empty transport edges. Since bi-partite transport graph G of Fig. 4 is based on bipartite transport graph G of Fig. 2 and since the plurality of matching edges has not yet been updated, the plurality of matching edges in this example at this point includes empty transport edges

$e_1$ and $e_2$. Empty transport edges $e_3$ and $e_4$ incident on left node $t_{5l}$ thus are not included in the plurality of matching edges. Therefore, the determination of alternating tree $T_A$ may continue along both empty transport edges $e_3$ and $e_4$ and thereby along right nodes $t_{3r}$ and $t_{4r}$.

It should be noted that empty transport edges incident on the added left node and the added right node are always not included in the plurality of matching edges due to the fact that they have just been added to bipartite transport graph G and because the plurality of matching edges has not yet been updated.

On right nodes $t_{3r}$ and $t_{4r}$, empty transport edges $e_1$ and $e_2$ are respectively incident. Both empty transport edges $e_1$ and $e_2$ are included in the plurality of matching edges, alternating tree $T_A$ therefore continues along empty transport edges $e_1$ and $e_2$ and thereby along right nodes $t_{2l}$ and $t_{3l}$. Since there are no empty transport edges incident on right nodes $t_{2l}$ and $t_{3l}$, along which alternating tree $T_A$ has not already continued, determination of alternating tree $T_A$ terminates at right nodes $t_{2l}$ and $t_{3l}$.

As can be seen from the example of Figs. 4 and 5, the general principle of determining alternating tree $T_A$ is therefore to start at one of the added nodes and to then continue along empty transport edges. The empty transport edges are alternatingly not included and included in the plurality of matching edges. Determination of alternating tree $T_A$ terminates once all nodes of bipartite transport graph G have been reached at which either a required next empty transport edge is not present or on which only empty transport edges along which alternating tree $T_A$ has already continued are incident.

It should be noted that determination of alternating tree $T_A$ in Figs. 4 and 5 started at added left node $t_{5l}$ given that no empty transport edge is incident on added right node $t_{5r}$ in Fig. 4. However, method 100 may in step 122 determine alternating tree $T_A$ starting at any one of the added right node or the added left node.

Step 122 may include step 122a, in which method 100 alternatingly adds empty transport edges not included and included in the plurality of matching edges as well as the corresponding left and right nodes to the alternating tree. In other words, method 100 may in step 122a copy the corresponding empty transport edges and nodes of bipartite transport graph G along which alternating tree $T_A$ continues to alternating tree $T_A$. However, the determination of alternating tree $T_A$ may also add a flag to the involved empty transport edges and nodes of bipartite transport graph G or may otherwise indicate that alternating tree $T_A$ continues along the involved empty transport edges and nodes of bipartite transport graph G.

Alternating tree $T_A$ may be determined, based on the general principle discussed above, according to any suitable method for searching a graph, such as bipartite transport graph G. Examples of such suitable methods include breadth-first search (BFS) and depth-first search (DFS). When using BFS, alternating tree $T_A$ may be determined by determining from each node all empty transport edges along which alternating tree $T_A$

continues. BFS thereby branches out at nodes on which more than one empty transport edge complying with the general principle of the alternating tree $T_A$ is incident. When using DFS, alternating tree $T_A$ may initially be the first path complying with the general principle of the alternating tree $T_A$. Once a node of bipartite transport graph G is reached at which alternating tree $T_A$ does not continue, DFS may back-track along the path to determine any branches. DFS may then continue along the determined branches until all nodes have been reached at which alternating tree $T_A$ does not continue. When using DFS, in some examples of the present invention determination of alternating tree $T_A$ may terminate before reaching all nodes at which alternating tree $T_A$ does not continue, if DFS determines a path which is an augmenting path, as will be discussed in the following.

In step 123, method 100 determines whether alternating tree $T_A$ includes an augmenting path. An augmenting path is a path within alternating tree $T_A$ which terminates with an empty transport edge not included in the plurality of matching edges. More precisely, an augmenting path is a path which may be used to augment the number of empty transport edges included in plurality of matching edges M. Being able to augment the number of empty transport edges in plurality of matching edges M indicates that the transport currently being added to bipartite transport graph G can be integrated into one of the sequence of transports performed by the vehicles of the industrial production. This will be discussed in more detail with regard to steps 124 and 130.

In the example of Fig. 5, alternating tree $T_A$ includes two paths: one path via edges $e_3$ and $e_1$ and one path via edges $e_4$ and $e_2$. Both paths therefore terminate with an empty transport edge included in the plurality of matching edges (cf. discussion of the plurality of matching edges of Fig. 2). As such, method 100 in the example of Fig. 5 determines that alternating tree $T_A$ of Fig. 5 does not include an augmenting path. Method 100 thus continues at step 126 or may continue at intermediate step 125. In other examples, method 100 may continue at step 124, as shown in Fig. 1A.

In step 125, method 100 may re-determine alternating tree $T_A$ starting at the other one of the added left node and the added right node. In the example of Figs. 4 and 5, this would correspond to determining alternating tree $T_A$ again, this time starting at right node $t_{5r}$. However, as discussed above, such a determination is not possible given that there are no empty transport edges incident on right node $t_{5r}$. Accordingly, step 125 may be skipped if it is evident from bipartite transport graph G that such a re-determination will not lead to the determination of an augmenting path given the current start time of the transport currently being added to bipartite transport graph G.

In step 126, method 100 determines if alternating tree $T_A$ does not include an augmenting path, whether to amend the transport corresponding to the added left node and the added right node. More precisely, method 100 determines in step 126 whether the transport currently being added to bipartite transport graph G should be amended. Such an amendment may in turn amend alternating tree $T_A$, which may lead alternating tree $T_A$ to include an augmenting path. In other words, amending the transport currently being added to bipartite transport graph G to thereby amend alternating tree $T_A$ to include an augmenting path enables integrating the transport into one of the transport sequences performed by the vehicles of the industrial production. In some examples of the present invention, step 126 may include steps 126a to 126e to further determine whether to amend the transport currently being added to bipartite transport graph G, as will be discussed in the following.

In step 126a, method 100 may determine if an unscheduled vehicle is available. Based on this determination, method 100 can determine the need to amend the transport currently being added to bipartite transport graph G. If an unscheduled vehicle is available, i.e., if there are still vehicles unassigned to transport sequences, it may be unnecessary to amend the transport currently being added to bipartite transport graph G. In such situations, the unscheduled vehicle may be assigned to the transport, thereby alleviating the need to determine how the transport can be integrated into a sequence of transports. In some embodiments of the present application, an unscheduled vehicle is available if the number of vehicles present in the industrial production exceeds the difference between the number of transports added to bipartite transport graph G and the number of edges in plurality of edges E. Based on this graph-based determination of the availability of an unscheduled vehicle, method 100 may determine such an availability without having to schedule all vehicles on the transports first.

Based on the discussion of step 126a, method 100 may refrain in step 126b, if an unscheduled vehicle is available, from amending the start time of the transport currently being added to bipartite transport graph G. This is indicated in Fig. 1A by step 126b being a connection from step 126a to step 120. This connection indicates that, if an unscheduled vehicle is available, method 100 leaves the transport currently being added to bipartite transport graph G as is and thus continues to perform step 120 again to add the next transport of transport set T to bipartite transport graph G.

In step 126c, method 100 may amend the start time of the transport corresponding to the added left node and the added right node. In other words, method 100 may change the start time of the transport currently being added to bipartite transport graph G in order to obtain an augmenting path in alternating tree $T_A$. Obtaining an augmenting path due to the changed start time indicates that the changed start time enables the integration of the transport into a transport sequence. In some embodiments, amending the start time in step 126c may further include a step 126d. In step 126, method 100 may determine the amended start time by determining a minimum of the end times of the transports already added to bipartite transport graph G and the corresponding durations of empty transports from their respective end locations to the start location of the transport. More precisely, method 100 may in step 126d determine, for each transport already added to bi-partite transport graph G, by which point in time a vehicle of the industrial production can reach the start location of the transport currently being added to bipartite transport graph G. To determine this point in time, method 100 may determine the duration of an empty transport from the respective end location to the start location of the transport currently being added to bipartite transport graph G. Method 100 may then add this duration to the end time of the respective transport. Once this point in time has been determined for all transports already added to bipartite transport graph G, the earliest point in time may be chosen as the amended start time. In some embodiments, the start time may also be amended by increasing the start time in time intervals and by repeating steps 121 to 123 until an amended start time has been found which leads to an augmenting path in alternating tree $T_A$.

Following steps 126c and 126d, method 100 may, in step 126e, repeat step 121, i.e., the step of adding the transport to bipartite transport graph G based on the amended start time. However, since the left node and the right node corresponding to the transport currently being added to bipartite transport graph G have already been added to bipartite transport graph G, the repetition of step 121 only updates plurality of empty transport edges E. Updating the plurality of empty transport edges E may be performed by determining empty transport edges incident on the added left node and the added right node based on the amended start time as discussed above with regard to step 121a.

Since step 126e may be considered a modified repetition of step 121, step 126e is indicated in Fig 1A as an arrow returning method 100 to step 121.

It should be noted that step 126e or repeating step 121, respectively, do not re-generate bipartite transport graph G. As stated above, both steps merely lead to an update of the plurality of empty transport edges incident on the left and right nodes corresponding to the transport currently being added.

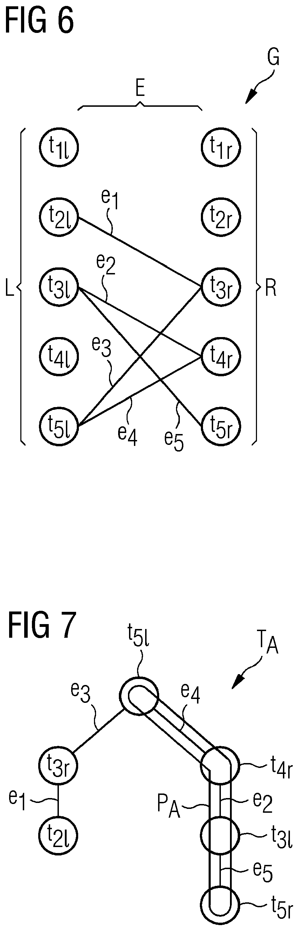

Turning to the example of Figs. 4 and 5, method 100 determined in step 123 that alternating tree $T_A$ of Fig. 5 does not include an augmenting path and that re-determining alternating tree $T_A$ in step 125 would not lead to an augmenting path either. Accordingly, in the example of Figs. 5 and 6, method 100 continues at step 126 to determine whether to amend transport $t_5$, i.e. whether it is necessary to increase the number of empty transport edges in plurality of empty transport edges M in order to perform transport $t_5$. For the purpose of the example used throughout the figures, it is assumed that two vehicles are present in the industrial production and that both vehicles are already scheduled, as will be shown with regard to Fig. 3 and steps 130 to 133. Accordingly, method 100 may determine in steps 126 to 126d to amend the start time of transport $t_5$. Based on the amended start time of transport $t_5$, bipartite transport graph G is updated in step 126e or modified step 121, respectively. Following the update, bipartite transport graph G includes an additional empty transport edge $e_5$, as shown in Fig. 6. In other words, the amended start time of transport $t_5$ makes it possible that a vehicle, which has performed transport $t_3$, can now reach the start location of transport $t_5$ before the start time of transport $t_5$. Without amending the start time of transport $t_5$, it was not possible for a vehicle to reach the start location of transport $t_5$ after performing transport $t_3$, as indicated in Fig. 4.

Based on updated bipartite transport graph G of Fig. 6, method 100 performs step 122 to determine updated alternating tree $T_A$. Updated alternating tree $T_A$ as determined based on updated bipartite transport graph G is shown in Fig. 7. As can be seen by comparing alternating tree $T_A$ of Fig. 5 and updated alternating tree $T_A$ of Fig. 7, the addition of empty transport edge $e_5$ extends a branch of alternating tree $T_A$ to node $t_{5r}$ based on the general principle of alternating tree $T_A$ discussed above.

Based on updated alternating tree TA of Fig. 7, method 100 determines in step 123 that updated alternating tree $T_A$ now includes a path terminating in an empty transport edge not included in plurality of matching edges M. Empty transport edge $e_5$ cannot be included in plurality of matching edges M given that it has just been added to bipartite transport graph G. Therefore, method 100 determines in step 123 that alternating tree $T_A$ of Fig. 7 now includes an augmenting path $P_A$, as indicated in Fig. 7.

The example of alternating tree $T_A$ of Fig. 5 and of updated alternating tree $T_A$ of Fig. 7 shows that the amended start time of transport $t_5$ leads to an extension of alternating tree $T_A$. Alternating tree $T_A$ does not need to be re-determined in its entirety. The fact that alternating tree $T_A$ does not need to be re-determined in its entirety when a transport is amended improves the runtime of method 100.

Generally speaking, this improvement in runtime is enabled by the structure of bipartite transport graph G and the alternating structure of alternating tree $T_A$. The improved runtime is further enabled by the fact that bipartite transport graph G is only amended and not re-determined when adding a further transport and the fact that alternating tree $T_A$ is also typically only amended when amending the start time of the further transport.

Given that updated alternating tree $T_A$ of Fig. 7 now includes augmenting path $P_A$, method 100 now continues at step 124.

In step 124, method 100 updates plurality of matching edges M. Updating plurality of matching edges M refers to updating which empty transport edges of the plurality of empty transport edges E should be included in the plurality of matching edges M. Accordingly, method 100 removes and/or adds empty transport edges to the plurality of matching edges M. The decision to add and/or remove empty transport edges from the plurality of matching edges may be based on augmenting path $P_A$ of alternating tree $T_A$. Therefore, in some embodiments of the present invention, step 124 may include steps 124a and 124b. In step 124a, method 100 may add all empty transport edges of the augmenting path not included in the plurality of matching edges to the plurality of matching edges. In step 124b, method 100 may remove all empty transport edges of the augmenting path included in the plurality of matching edges from the plurality of matching edges.

Referring to the example of updated bipartite transport graph G of Fig. 6 and updated alternating tree $T_A$ of Fig. 7, method 100 has determined in step 123 an augmenting path PA including empty transport edges $e_4$, $e_2$ and $e_5$. As discussed with regard to Fig. 2, plurality of matching edges includes M edges $e_1$ and $e_2$. Method 100 may thus in steps 124 and 124a add empty transport edges $e_4$ and $e_5$ to the plurality of matching edges M since neither one of these empty transport edges is included in the plurality of matching edges M. Further, method 100 may in steps 124 and 124b remove empty transport edge $e_2$ from the plurality of matching edges M since this empty transport edge is included in the plurality of matching edges M. Following step 124 and optionally steps 124a and 124b, updated plurality of matching edges M of the example of Figs. 6 and 7 now includes empty transport edges $e_1$, $e_4$ and $e_5$.

As can be seen, updated plurality of matching edges M includes one empty transport edge more than the plurality of matching edges M of Figs. 2 to 5. Based on augmenting path $P_A$, the number of empty transport edges in plurality of matching edges M has thus been augmented or increased, respectively, by one empty transport edge.

With transport $t_5$ added to bipartite transport graph G and with the plurality of matching edges M updated based on augmenting path PA, method 100 concludes step 120 and its sub-steps in the example of Figs. 2 to 8 since all transports of transport set T of this example have been added to bipartite transport graph G. As stated above, transport set T may include significantly more transports. Accordingly, method 100 would in such cases perform step 120 and its sub-steps until all such transports have been added to bipartite transport graph G.

It should be noted that, once all transports of transport set T have been added to bipartite transport graph G in accordance with the above principles, all transports can be scheduled on the number of vehicles present in the industrial production. Accordingly, if method 100 is used to e.g. determine the feasibility of a planned floorplan and a planned number of vehicles, obtaining a transport schedule may not be necessary. Accordingly, the following steps of method 100 regarding the determination of the actual transport schedule may be omitted. In such cases, method 100 consequently terminates at this point.

In step 130, method 100 may schedule the transports on the vehicles based on the plurality of matching edges M and a plurality of equal transport edges. Equal transport edges may be edges incident on nodes of the left node set and of the right node set corresponding to the same transport of transport set T. Accordingly, an empty transport edge may be defined as

$$e_{ti} = (t_{il}, t_{ir}).$$

The plurality of equal transport edges may therefore be defined as

$$E_T = (e_{t1}, \dots, t_{tn}).$$

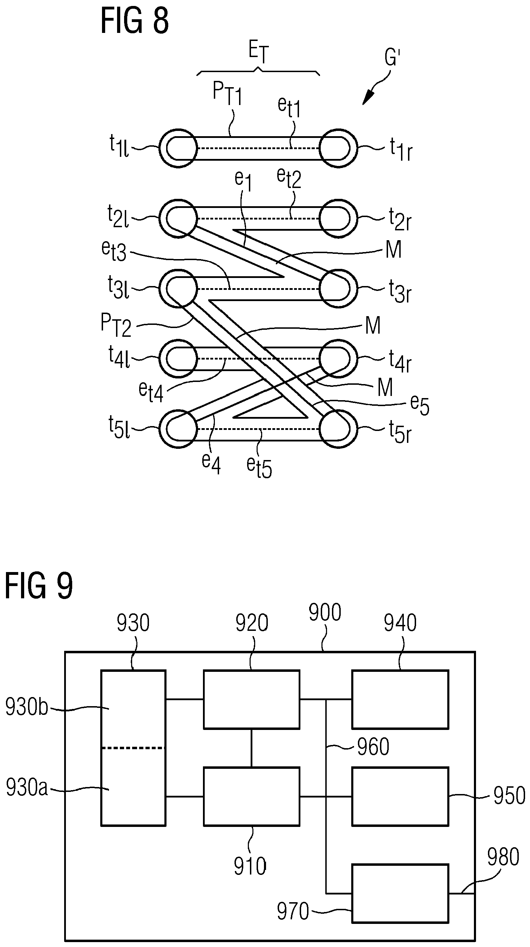

Both Fig. 3 and Fig. 8 show the plurality of equal transport edges $E_T$ corresponding to the respective bipartite transport graphs G of Figs. 2 and 6. As can be seen, there are always as many equal transport edges in plurality of equal transport edges $E_T$ as there are transports in bipartite transport graph G. Accordingly, in Fig. 3 there are four equal transport edges $e_{t1}$ to $e_{t4}$ and in Fig. 8 there are five equal transport edges $e_{t1}$ to $e_{t5}$.

In step 130, method 100 may use bipartite transport graph G and plurality of equal transport edges $E_T$ to schedule the transports of transport set T on the number of vehicles of the industrial production. To do so, method 100 may, in step 131, add plurality of equal transport edges $E_T$ to bipartite transport graph G. Based on this modified bipartite transport graph G, method 100 may further, in step 132, determine a plurality of transport paths. Each transport path may start at a node of right node set R and may alternatingly continue along equal transport edges of the plurality of equal transport edges $E_T$ and matching edges of the plurality of matching edges. In other words, scheduling the vehicles of the industrial production may start by identifying two transports which can be performed after one another, as indicated by the plurality of matching edges M. While such an indication could theoretically be provided by plurality of empty transport edges E as well, plurality of matching edges M represents a subset of plurality of empty transport edges E, which includes only one empty transport edge incident on each left node and on each right node, as discussed above. As such, by basing scheduling of transports on vehicles on the plurality of matching edges M and not on the plurality of empty transport edges E, scheduling the transports can be performed with improved runtime.

Once a first pair of transports, which can be performed after one another, has been determined, i.e. once a first matching edge of the plurality of matching edges has been selected, the transport path has moved from a left node to a right node. The transport path then continues along an equal transport edge. Per definition, there is always only one equal transport edge incident on each node, accordingly there will always be only one way how to continue the transport path from a right node. Continuing along an equal transport edge leads the transport path to switch from a right node corresponding to a transport to a left node indicating that same transport. In other words, continuing along an equal transport edge does not add a transport to the transport path. Rather, it enables the transport path to find the next matching edge from a left node to a right node indicating which transport may be performed next. The transport path continues accordingly until a node is reached at which the transport path cannot continue.

To provide an example, Figs. 3 and 8 show how transports may be scheduled on vehicles based on transport paths. Turning first to Fig. 8, Fig. 8 shows bipartite transport graph of Fig. 6 with plurality of equal transport edges $E_T$ and plurality of matching edges M. For simplicity, plurality of matching edges E is not shown in Fig. 8, Furthermore, transport paths $P_{T1}$ and $P_{T2}$ are indicated in Fig. 8.

As can be seen, transport path $P_{T1}$ starts at left node $t_{1l}$. Since there is no matching edge incident on left node $t_{1l}$, transport path $P_{T1}$ terminates at transport $t_1$. Accordingly, a vehicle assigned to transport path $P_{T1}$ may only perform transport $t_1$.

Transport path $P_{T2}$ starts at left node $t_{2l}$ and continues along empty transport edge $e_1$ to right node $t_{3r}$. Then, transport path $P_{T2}$ returns to left node set L via equal transport edge $e_{t3}$. From there, transport path $P_{T2}$ continues to right node $t_{5r}$ via empty transport edge $e_5$ and returns to left node set L at left node $t_{5l}$ via equal transport edge $e_{t5}$. From node $t_{5l}$, transport path $P_{T2}$ continues via equal transport edge $e_4$ to right node $t_{4r}$. At right node $t_{4r}$, transport path $P_{T2}$ terminates. Consequently, transport path $P_{T2}$ indicates that transports $t_2$, $t_3$, $t_5$ and $t_4$ can be performed in sequence by a vehicle assigned to transport path $P_{T2}$. Since there are two vehicles present in the exemplary industrial production of Figs. 2 to 8, all five transports can be performed by the two vehicles of the exemplary industrial production.

For comparison, Fig. 3 shows how transports may have been scheduled on vehicles based on bipartite transport graph G prior to adding transport $t_5$ and updating plurality of matching edges M. As can be seen, transport path $P_{T1}$ is identical to transport path $P_{T1}$ of Fig. 8. However, transport path $P_{T2}$ of Fig. 3 indicates that transports $t_2$, $t_3$ and $t_4$ may be performed in sequence compared to transports $t_2$, $t_3$, $t_5$ and $t_4$ of transport path $P_{T2}$ of Fig. 8. Accordingly, comparing Figs. 3 and Figs. 8 shows that method 100 based on updated plurality of matching edges M not only appends an added transport to a transport path but re-arranges the transport path.

Method 100 may further include a step 133, in which method 100 selects at least one transport path of the plurality of transport paths based on a length of each transport path of the plurality of transport paths, the length indicating a number of transports consecutively performable by a vehicle. Figs. 3 and 8 only show examples of scheduling transports on vehicles which result in an equal number of transport paths and vehicles. Accordingly, the selection of the transport paths is straight forward. However, in some examples there may be more transport paths, i.e., possible transport sequences, than vehicles. In such examples, method 100 may in step 133 determine the longest transport path or transport paths to be scheduled on vehicles of the industrial production.

As stated above, method 100 provides a way of determining the feasibility of scheduling transports on vehicles in an industrial production (steps 110 to 126e) and of scheduling transports on vehicles in an industrial production (steps 110 to 133) with improved runtime. As can be seen from the above discussion of method 100, the runtime is influenced by the determination of alternating tree $T_A$ and the update of plurality of matching edges M as well as the determination of a start time of the transport being added to bipartite transport graph G leading to an augmenting path.

The worst-case runtime of the determination of alternating tree $T_A$ and the update of plurality of matching edges M increases linearly with the number of empty transport edges in the plurality of empty run edges E and the number of nodes in the left node set L and the right node set R. These numbers in turn increase with the number n of transports in transport set T. The worst-case runtime of the determination of a start time of the transport being added to bipartite transport graph G increases logarithmically with the number of end locations of the transports in transport set T. Since in the worst-case scenario each transport in the transport set T ends at a different end location, the worst case runtime of determining the start time of the transport being added to bipartite transport graph G may increase logarithmically with the number of transports n. Accordingly, the worst case runtime of method 100 may be

$$O(n * \log n).$$

Method 100 has been described to determine the feasibility of scheduling transports by determining for each transport the earliest start time at which the transport may be performed. However, method 100 may also be used to determine the feasibility of scheduling transports by determining for each transport the latest start time before a deadline by which a transport should be performed. If method 100 is to be used for this purpose, updating the plurality of empty transport edges adds empty transport edges to the plurality of empty transport edges corresponding to transports now possible from the end location of the transport currently being added to bipartite transport graph G to start locations of other transports due to the earlier start time. Analogously, updating the plurality of empty transport edges removes empty transport edges from bipartite graph G corresponding to empty transports from end locations of other transports, which can no longer reach the start location of the transport currently being added to bipartite transport graph G due to the earlier start time.

Fig. 9 illustrates a computing device 900 configured to perform method 100. Computing device 900 may include a processor 910, a graphics processing unit (GPU) 920, a memory 930, a storage 940, a removable storage 950, a bus 960, a communications interface 970 and a connection 980.

Processor 910 may be any kind of single-core or multi-core processing unit employing a reduced instruction set (RISC) or a complex instruction set (CISC). Exemplary RISC processing units include ARM based cores or RISC V based cores. Exemplary CISC processing units include $\times86$ based cores or x86-64 based cores. Processor 910 may perform instructions causing computing device 900 to perform method 100. Processor 910 may be directly coupled to any of the components of computing device 900 or may be directly coupled to memory 930, GPU 920 and bus 960.

GPU 920 may be any kind of processing unit optimized for processing graphics related instructions or more generally for parallel processing of instructions. As such, GPU 920 may perform part or all of method 100 to enable fast parallel processing of instructions relating to method 100. It should be noted that in some embodiments, processor 910 may determine that GPU 920 need not perform instructions relating to method 100. GPU 920 may be directly coupled to any of the components of computing device 900 or may be directly coupled to processor 910 and memory 930. In some embodiments, GPU 920 may also be coupled to bus 960.

Memory 930 may be any kind of fast storage enabling processor 910 and GPU 920 to store instructions for fast retrieval during processing of the instructions well as to cache and buffer data. Memory 930 may be a unified memory coupled to both processor 910 and GPU 920 enabling allocation of memory 930 to processor 910 and GPU 920 as needed. Alternatively, processor 910 and GPU 920 may be coupled to separate processor memory 930a and GPU memory 930b.

Storage 940 may be a storage device enabling storage of program instructions and other data. For example, storage 940 may be a hard disk drive (HDD), a solid state disk (SSD) or some other type of non-volatile memory. Storage 940 may for example store the instructions of method 100 as well as the various data structures of method 100, i.e., transport set T, alternating tree $T_A$ and bipartite transport graph G.

Removable storage 950 may be a storage device which can be removably coupled with computing device 900. Examples include a digital versatile disc (DVD), a compact disc (CD), a Universal Serial Bus (USB) storage device, such as an external SSD, or a magnetic tape. Removable storage 950 may for example be used to provide transport set T to computing device 900 and thereby to method 100 or to store the scheduled transports. It should be noted that removable storage 950 may also store other data, such as instructions of method 100, or may be omitted.

Storage 940 and removable storage 950 may be coupled to processor 910 via bus 960. Bus 960 may be any kind of bus system enabling processor 910 and optionally GPU 920 to communicate with storage device 940 and removable storage 950. Bus 950 may for example be a Peripheral Component Interconnect express (PCIe) bus or a Serial AT Attachment (SATA) bus.

Communications interface 970 may enable computing device 900 to interface with external devices, either directly or via network, via connection 980. Communications interface 970 may for example enable computing device 900 to couple to a wired or wireless network, such as Ethernet, Profinet, Wifi, a Controller Area Network (CAN) bus or a fieldbus, such as profi-bus. For example, computing device 900 may be coupled with a fieldbus of the industrial production to receive transports to be scheduled. Communications interface may also be a USB port or a serial port to enable direct communication with an external device.

The invention may further be illustrated by the following examples.

In an example, a computer-implemented method for scheduling transports by vehicles in an industrial production comprises the steps of: obtaining a transport set including transports to be performed by vehicles; adding each transport of the transport set to a bipartite transport graph having a left node set, a right node set, a plurality of empty transport edges and a plurality of matching edges, wherein adding each transport includes: adding a left node to the left node set and a right node to the right node set corresponding to each transport and empty transport edges incident on one of the added left node and the added right node to the plurality of empty transport edges; and determining an alternating tree, the alternating tree starting at one of the added left node and the added right node and alternatingly continuing along empty transport edges not included and included in the plurality of matching edges; determining whether the alternating tree includes an augmenting path, the augmenting path being a path terminating with an empty transport edge not included in the plurality of matching edges, if the alternating tree includes an augmenting path, updating the plurality of matching edges, and, if the alternating tree does not include an augmenting path, determining whether to amend the transport corresponding to the added left node and the added right node, and scheduling the transports on the vehicles based on the plurality of matching edges and a plurality of equal transport edges.

In an example, adding each transport further includes: if the alternating tree does not include an augmenting path, re-determining the alternating tree starting at the other one of the added left node and the added right node.

In an example, determining if an unscheduled vehicle is available; if an unscheduled vehicle is available, refrain from amending the start time; and if an unscheduled vehicle is not available: amending a start time of the transport corresponding to the add-ed left node and the added right node, and repeating the step of adding the transport to the bipartite transport graph is repeated based on the amended start time, wherein repeating the step of adding the left node to the left node set and the right node to the right node set corresponding to the transport and empty transport edges incident on the added left node and the added right node to the plurality of empty transport edges only updates the plurality of empty transport edges.

In an example, an unscheduled vehicle is available if the number of vehicles present in the industrial production exceeds the difference be-tween the number of transports added to the bipartite transport graph and the number of edges in the plurality of matching edges.

In an example, each transport of the transport set includes an end time and wherein amending a start time of the transport corresponding to the added left node and the added right node includes determining a minimum of the end times of the transports already added to the bipartite transport graph and corresponding durations of empty transports performable by a vehicle to a start location of the transport corresponding to the add-ed left node and the added right node.

In an example, determining the alternating tree includes: alternatingly adding empty transport edges not included and included in the plurality of matching edges as well as the corresponding left and right nodes to the alternating tree.

In an example, updating the plurality of matching edges based on the alternating tree includes: adding all empty transport edges of the augmenting path not included in the plurality of matching edges to the plurality of matching edges, and removing all empty transport edges of the augmenting path included in the plurality of matching edges from the plurality of matching edges.

In an example, each empty transport edge of the plurality of empty transport edges corresponds to an empty transport performable by a vehicle between two transports of the transport set.

In an example, adding the empty transport edges incident on the added left node and the added right node to the bipartite transport graph includes determining, based on a start time, a start location, an end time and an end location of the transport corresponding to the added node, empty transports performable by vehicles between the transport corresponding to the added nodes and the transports of the transport set previously added to the bipartite transport graph.

In an example, the plurality of equal transport edges is incident on nodes of the left node set and of the right node set corresponding to the same transport of the transport set.

In an example, scheduling the transports on the vehicles based on the plurality of matching edges and the plurality of equal transport edges includes: adding the plurality of equal transport edges to the bipartite transport graph; and determining a plurality of transport paths including at least one transport path, each transport path starting at a node of the right node set, wherein the at least one transport path alternatingly continues along equal transport edges and matching edges of the plurality of matching edges.

In an example, scheduling the transports on the vehicles based on the plurality of matching edges and a plurality of equal transport edges further includes: selecting at least one transport path of the plurality of transport paths based on a length of each transport path of the plurality of transport paths, the length indicating a number of transports consecutively performable by a vehicle.

In an example, a computer-readable storage device configured to store instructions executable by at least one processor of a computing device, wherein the instructions cause the at least one processor to perform the method of any one of the preceding examples.

In an example, an apparatus for scheduling transports by vehicles in an industrial production, the apparatus comprises at least one processor and a storage medium, wherein the storage medium comprises instructions, which cause the at least one processor to obtain a transport set including transports to be performed by vehicles, add each transport of the transport set to a bipartite transport graph having a left node set, a right node set, a plurality of empty transport edges and a plurality of matching edges, wherein adding each transport includes adding a left node to the left node set and a right node to the right node set corresponding to each transport and empty transport edges incident on one of the added left node and the added right node to the plurality of empty transport edges, and determining an alternating tree, the alternating tree starting at one of the added left node and the added right node and alternatingly continuing along empty transport edges not included and included in the plurality of matching edges, determining whether the alternating tree includes an augmenting path, the augmenting path being a path terminating with an empty transport edge not included in the plurality of matching edges, if the alternating tree includes an augmenting path, updating the plurality of matching edges, and if the alternating tree does not include an augmenting path, determining whether to amend the transport corresponding to the added left node and the added right node, and schedule the transports on the vehicles based on the plurality of matching edges and a plurality of equal transport edges.

In an example, the storage medium (940, 950) of the apparatus further comprises instructions, which cause the at least one processor to perform any one of the preceding method examples.

The preceding description has been provided to illustrate a method for scheduling transports by vehicles in an industrial production. It should be understood that the description is in no way meant to limit the scope of the invention to the precise embodiments discussed throughout the description. Rather, the person skilled in the art will be aware that these embodiments may be combined, modified or condensed without departing from the scope of the invention as defined by the following claims.

**Claims**

1.  A computer-implemented method for scheduling transports by vehicles in an industrial production, the method comprising the steps of:

    obtaining (110) a transport set including transports to be performed by vehicles;
    adding (120) each transport of the transport set to a bipartite transport graph (G) having a left node set (L), a right node set (R), a plurality of empty transport edges (E) and a plurality of matching edges, wherein adding each transport includes:

    adding (121) a left node to the left node set (L) and a right node to the right node set (R) corresponding to each transport and empty transport edges ($e_1$ - $e_5$) incident on one of the added left node and the added right node to the plurality of empty transport edges (E); and
    determining (122) an alternating tree ($T_A$), the alternating tree ($T_A$) starting at one of the added left node and the added right node and alternatingly continuing along empty transport edges ($e_1$ - $e_5$) not included and included in the plurality of matching edges;
    determining (123) whether the alternating tree ($T_A$) includes an augmenting path, the augmenting path being a path terminating with an empty transport edge ($e_1$ - $e_5$) not included in the plurality of matching edges,
    if the alternating tree ($T_A$) includes an augmenting path, updating (124) the plurality of matching edges, and
    if the alternating tree ($T_A$) does not include an augmenting path, determining (126) whether to amend the transport corresponding to the added left node and the added right node, and

    scheduling the transports on the vehicles based on the plurality of matching edges and a plurality of equal transport edges ($E_T$).

2.  The method of claim 1, wherein adding each transport further includes:
    if the alternating tree ($T_A$) does not include an augmenting path, re-determining (125) the alternating tree ($T_A$) starting at the other one of the added left node and the added right node.

3.  The method of any one of claim 1 or claim 2, wherein determining whether to amend the transport includes: determining (126a) if an unscheduled vehicle is available;

    if an unscheduled vehicle is available, refrain (126b) from amending the start time; and
    if an unscheduled vehicle is not available:

        amending (126c) a start time of the transport corresponding to the added left node and the added right node, and
        repeating (126e) the step of adding the transport to the bipartite transport graph (G) is repeated based on the amended start time,
        wherein repeating the step of adding the left node to the left node set (L) and the right node to the right node set (R) corresponding to the transport and empty transport edges ($e_1$ - $e_5$) incident on the added left node and the added right node to the plurality of empty transport edges (E) only updates the plurality of empty transport edges (E).

4.  The method of claim 3, wherein an unscheduled vehicle is available if the number of vehicles present in the industrial production exceeds the difference between the number of transports added to the bipartite transport graph (G) and the number of edges in the plurality of matching edges.

5.  The method of any one of claims 3 or 4, wherein each transport of the transport set includes an end time and wherein amending a start time of the transport corresponding to the added left node and the added right node includes determining (126d) a minimum of the end times of the transports already added to the bipartite transport graph (G) and corresponding durations of empty transports performable by a vehicle to a start location of the transport corresponding to the added left node and the added right node.

6.  The method of any one of the preceding claims, wherein determining the alternating tree ($T_A$) includes:
    alternatingly adding (122a) empty transport edges ($e_1$ -$e_5$) not included and included in the plurality of matching edges as well as the corresponding left and right nodes to the alternating tree ($T_A$).

7.  The method of any one of the preceding claims, wherein updating the plurality of matching edges based on the alternating tree ($T_A$) includes:

    adding (124a) all empty transport edges ($e_1$ - $e_5$) of the augmenting path not included in the plurality of matching edges to the plurality of matching edges, and

removing (124b) all empty transport edges ($e_1$ - $e_5$) of the augmenting path included in the plurality of matching edges from the plurality of matching edges.

8. The method of any one of the preceding claims, wherein each empty transport edge ($e_1$ - $e_5$) of the plurality of empty transport edges (E) corresponds to an empty transport performable by a vehicle between two transports of the transport set.

9. The method of any one of the preceding claims, wherein adding the empty transport edges ($e_1$ - $e_5$) incident on the added left node and the added right node to the bipartite transport graph (G) includes determining (121a), based on a start time, a start location, an end time and an end location of the transport corresponding to the added node, empty transports performable by vehicles between the transport corresponding to the added nodes and the transports of the transport set previously added to the bipartite transport graph (G).

10. The method of any one of the preceding claims, wherein the plurality of equal transport edges ($E_T$) is incident on nodes of the left node set (L) and of the right node set (R) corresponding to the same transport of the transport set.

11. The method of claim 10, wherein scheduling the transports on the vehicles based on the plurality of matching edges and the plurality of equal transport edges ($E_T$) includes:

adding (131) the plurality of equal transport edges ($E_T$) to the bipartite transport graph (G); and determining (132) a plurality of transport paths including at least one transport path ($P_{T1}$, $P_{T2}$), each transport path ($P_{T1}$, $P_{T2}$) starting at a node of the right node set (R), wherein the at least one transport path ($P_{T1}$, $P_{T2}$) alternatingly continues along equal transport edges ($E_T$) and matching edges of the plurality of matching edges.

12. The method of claim 11, wherein scheduling the transports on the vehicles based on the plurality of matching edges and a plurality of equal transport edges ($E_T$) further includes:
selecting (133) at least one transport path ($P_{T1}$, $P_{T2}$) of the plurality of transport paths based on a length of each transport path of the plurality of transport paths, the length indicating a number of transports consecutively performable by a vehicle.

13. A Computer-readable storage device (940, 950) configured to store instructions executable by at least one processor (910) of a computing device (900), wherein the instructions cause the at least one processor (910) to perform the method of any one of claims 1 to 12.

14. An apparatus for scheduling transports by vehicles in an industrial production, the apparatus comprising at least one processor (910) and a storage medium (940, 950), wherein the storage medium (940, 950) comprises instructions, which cause the at least one processor (910) to:

obtain (110) a transport set including transports to be performed by vehicles;
add (120) each transport of the transport set to a bi-partite transport graph (G) having a left node set (L), a right node set (R), a plurality of empty transport edges (E) and a plurality of matching edges, wherein adding each transport includes:

adding (121) a left node to the left node set (L) and a right node to the right node set (R) corresponding to each transport and empty transport edges ($e_1$ - $e_5$) incident on one of the added left node and the added right node to the plurality of empty transport edges (E); and
determining (122) an alternating tree ($T_A$), the alternating tree ($T_A$) starting at one of the added left node and the added right node and alternatingly continuing along empty transport edges ($e_1$ - $e_5$) not included and included in the plurality of matching edges;
determining (123) whether the alternating tree ($T_A$) includes an augmenting path, the augmenting path being a path terminating with an empty transport edge ($e_1$ - $e_5$) not included in the plurality of matching edges, if the alternating tree ($T_A$) includes an augmenting path, updating (124) the plurality of matching edges, and
if the alternating tree ($T_A$) does not include an augmenting path, determining (126) whether to amend the transport corresponding to the added left node and the added right node, and

schedule the transports on the vehicles based on the plurality of matching edges and a plurality of equal transport edges ($E_T$).

15. The apparatus of claim 14, wherein the storage medium (940, 950) further comprises instructions, which cause the at least one processor (910) to perform the method of any one of claims 2 to 12.

FIG 1

# FIG 2

# FIG 3

FIG 4

FIG 5

# FIG 6

# FIG 7

FIG 8

FIG 9

Europäisches
Patentamt

European
Patent Office

Office européen
des brevets

# EUROPEAN SEARCH REPORT

Application Number

EP 22 18 8289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Matchings", Cornell University, Fall 2017. Algorithms, 1 September 2017 (2017-09-01), XP055965912, Retrieved from the Internet: URL:https://www.cs.cornell.edu/courses/cs6820/2017fa/handouts/matchings.pdf [retrieved on 2022-09-28] * Section 1; pages 1-6 * | 1-15 | INV. G06Q10/047 |

-----

**TECHNICAL FIELDS SEARCHED      (IPC)**

G06Q

The present search report has been drawn up for all claims

| Place of search | Date of completion of the search | Examiner |
|---|---|---|
| Munich | 10 January 2023 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)